# EUROPÄISCHE PATENTSCHRIFT

(11) **EP 0 552 422 B1**
(45) Veröffentlichungstag und Bekanntmachung des Hinweises auf die Patenterteilung: **29.06.1994**
(21) Anmeldenummer: 92117513.9
(22) Anmeldetag: 14.10.1992
(51) Int. Cl.: C04B 35/52, C10C 3/04, C10C 3/06

(54) **Sinterfähiges Kohlenstoffpulver und Verfahren zu seiner Herstellung**
Sinterable carbon powder and method of making it
Poudre en carbone frittable et procédé de sa fabrication

(30) Priorität: 16.01.1992 DE 4200958
(43) Veröffentlichungstag der Anmeldung: 28.07.1993
(73) Patentinhaber: RÜTGERSWERKE AKTIENGESELLSCHAFT, 60326 Frankfurt (DE)
(72) Erfinder: Boenigk, Winfried, Dr., W-4716 Olfen (DE); Behrens, Hans-Dieter, W-4630 Bochum 7 (DE); Niehoff, Andreas, Dr., W-4358 Haltern (DE); Spengler, Hans, Dr., W-4716 Olfen (DE)

(56) Entgegenhaltungen:
- EP-A- 0 056 338
- EP-A- 0 283 211

## Beschreibung

Die Erfindung betrifft ein sinterfähiges Kohlenstoffpulver für die Herstellung von Kohlenstoffkörpern hoher Dichte und Festigkeit ohne Verwendung von Bindemitteln und ein verfahren zur Herstellung dieses Kohlenstoffpulvers.

Es ist bekannt, Kohlenstoffkörper aus kalzinierten Koksen mit Pechbindemitteln durch Pressen, Brennen und ggf. Graphitieren herzustellen. Hohe Dichten werden erreicht, wenn der Koks vor dem Mischen mit dem Bindemittel fein gemahlen wird. Während des Brennprozesses entstehen in dem Kohlenstoffkörper durch Pyrolyse und destillative Verluste des Bindemittels Poren, die durch weitere Imprägnier- und Brennprozesse vermindert werden. Auf diese Weise ist es möglich, Graphitkörper mit einer Dichte bis zu 1,78 g/cm³ zu erzeugen. Da der Koks und der Bindemittelkohlenstoff unterschiedliche Eigenschaften haben, entstehen beim Carbonisieren und beim Graphitieren durch unterschiedliches Schrumpfen Spannungen, die zu Defekten an den Grenzflächen führen. Aus diesem Grunde haben so hergestellte Kohlenstoffkörper eine relativ geringe Festigkeit.

Es wurde daher nach Kohlenstoffpulvern gesucht, die geeignete Binde- und Sintereigenschaften besitzen und so ohne zusätzliche Bindemittel durch Pressen, Carbonisieren und ggf. Graphitieren zu Kohlenstoffkörpern verarbeitet werden können.

Aus der EP-A-0 156 051 und der EP-B-0 157 560 sind Kohlenstoffpulver mit einem Gehalt von mehr als 95 Gew.-% benzolunlöslichen und mehr als 80 Gew.-% chinolinunlöslichen Bestandteilen bekannt, die noch 4 bis 15 Gew.-% verdampfbare Bestandteile enthalten. Mit diesen Kohlenstoffpulvern lassen sich bei entsprechend hohen Preßdrücken durch Graphitieren Kohlenstoffkörper mit einer Dichte von 1,85 bis 2,05 g/cm³ herstellen. Das Kohlenstoffpulver soll noch 2,5 bis 15 Gew.-% chinolinlösliche aber benzolunlösliche Bestandteile (β-Harze) enthalten.

Hergestellt wird dieses Produkt durch die thermische Behandlung von Steinkohlenteerpech bei 350 bis 600 °C, Lösungsmittelextraktion des so behandelten Pechs, um einen benzolunlöslichen Rückstand zu erhalten, und erneute thermische Behandlung des Rückstandes unter Inertgas bei 250 bis 500 °C. Bei der ersten thermischen Behandlung entstehen Pechmesophasen in der isotropen Pechmatrix. Durch das Extrahieren der benzollöslichen Bestandteile dieser Matrix verbleibt nach der zweiten thermischen Behandlung ein Kohlenstoffpulver aus Mesophasen mit einer Beschichtung aus β-Harzen. Es handelt sich hier also ebenfalls um ein Zweikomponentensystem mit nicht optimalen Festigkeitseigenschaften. Ein weiterer Nachteil ist, daß die β-Harz-Beschichtung nicht alterungsbeständig ist, und daher die Bindekraft des sinterfähigen Pulvers mit der Lagerung abnimmt.

In der GB 1 492 832 wird vorgeschlagen, ein durch Destillation, Polymerisation oder Kondensation gewonnenes Pech mit einem atomaren H/C-Verhältnis bis zu 0,8 mit Sauerstoff, Schwefel oder Halogenen oder diese enthaltenden Verbindungen zu behandeln, bis eine bestimmte Menge dieser Elemente mit dem Pech in Abhängigkeit von dessen H/C-Verhältnis reagiert hat. Das unbehandelte Pech wird dabei zunächst vorzerkleinert, um die Reaktion einfacher durchführen zu können, und anschließend bis auf eine Partikelgröße von maximal 10 »m gemahlen. Aus diesem Pulver werden Kohlenstoffkörper hoher Dichte und Festigkeit hergestellt. In den Beispielen sind neben dem H/C-Verhältnis, dem Sauerstoffgehalt und dem Verkokungsrückstand auch der Gehalt an chinolinunlöslichen Bestandteilen angegeben, der etwa im Bereich von 7 bis 95 Gew.-% liegt. Der Gehalt an toluolunlöslichem oder β-Harzen ist ebensowenig angegeben wie der Erweichungsbeginn und spielt daher für die Erfindung offensichtlich keine Rolle.

Von diesem Stand der Technik geht die EP-A-0 283 211 aus. Ein Pech mit einem Mesophasengehalt von mindestens 50 Vol.-%, vorzugsweise mehr als 75 Vol.-%, insbesondere mehr als 95 Vol.-% wird bis auf eine Kornfeinheit von weniger als 10 »m gemahlen und oxidiert, um ein sinterfähiges Kohlenstoffpulver zu erhalten. Die Oxidation wird wie in der GB 1 492 832 in Abhängigkeit vom H/C-Verhältnis des Mesophasenpeches durchgeführt.

Durch das Mahlen des Pechs auf einen Partikeldurchmesser von weniger als 10 »m vor der Oxidation ist es möglich unter sonst gleichen Bedingungen Kohlenstoffkörper herzustellen, die eine etwa doppelt so hohe Biegefestigkeit aufweisen wie vergleichbare Kohlenstoffkörper nach der GB 1 492 832.

Die für beide Verfahren notwendige Mahlfeinheit wird vorzugsweise durch Naßmahlung in einem geeigneten Lösungsmittel erreicht. Vor der Oxidation ist daher eine Trocknung des Kohlenstoffpulvers erforderlich, die bei so feinen Pulvern recht aufwendig ist, wenn keine Lösungsmittel in die nachfolgenden Prozeßschritte mitgeschleppt werden sollen. Ein weiterer Nachteil des verbesserten Kohlenstoffpulvers nach der EP-A-0 283 211 ist, daß sehr hohe Drücke zur Herstellung dichter und biegefester Kohlenstoffkörper erforderlich sind. Dichten von mehr als 1,6 g/cm³ bei den carbonisierten Körpern werden nur bei Drücken von etwa 500 MPa erreicht. Die Biegefestigkeit dieser Körper liegt dann etwa bei 130 bis 140 MPa. In technischen Prozessen, insbesondere bei der Herstellung großer Formkörper lassen sich solche hohen Preßdrücke bis ins Innere der Pulverschüttungen nur schwer realisieren.

Es bestand daher die Aufgabe, ein sinterfähiges Kohlenstoffpulver und ein Verfahren zu seiner Herstellung zu entwickeln, bei dem die genannten Nachteile vermieden werden, so daß höherwertige Kohlenstoffkörper mit technisch vertretbarem Aufwand herstellbar sind.

Die Aufgabe wird erfindungsgemäß mit einem Kohlenstoffpulver gelöst, das 40 bis 75 Gew.-% chinolinunlösliche Bestandteile und mehr als 90 Gew.-% toluolunlösliche Bestandteile enthält, eine optische Anisotropie von weniger als 50 Vol.-% aufweist und einen Erweichungsbeginn zwischen 200 und 300 °C und einen Sauerstoffgehalt von mehr als 2 Gew.-% hat.

Ein solches Kohlenstoffpulver wird hergestellt durch Destillation eines bituminösen Produktes, wie beispielsweise steinkohlenstämmige- oder aromatische mineralölstämmige Teere oder Peche, bei einem Druck von maximal 5 mbar und einer Endtemperatur von mindestens 400 °C, Trockenmahlung des Destillationsrückstandes auf die gewünschte Partikelgröße und Oxidation des gemahlenen Destillationsrückstandes bei Temperaturen unterhalb der Temperatur beginnender Pulververbackung, bis auch der Kern der einzelnen Partikel nicht mehr schmilzt.

Die Mahlfeinheit ist vom gewünschten Endprodukt abhängig. Bei Kohlenstoff- oder Graphitkörpern ist in der Regel eine Aufmahlung auf eine mittlere korngröße von unter oder gleich 30 »m vorteilhaft. Das Mahlverfahren wird vorzugsweise kontinuierlich gestaltet, um so eine sehr gleichmäßige Korngrößenverteilung zu erhalten, wobei die verwendete Mühle mit einer Sichtereinrichtung gekoppelt wird.

Zur Bestimmung der erforderlichen Oxidationszeit werden Proben des gemahlenen Destillationsrückstandes bei der gewählten Temperatur über unterschiedliche Zeiten oxidiert und die erhaltenen Kohlenstoffpulver zu Probekörpern gepreßt und carbonisiert. Als Oxidationszeit wird die kürzeste Zeit genommen, bei der gepreßte Probekörper während der Carbonisierung nicht mehr bläht. Dies ist ein sicheres Zeichen dafür, daß die Partikel auch im Kern nicht mehr schmelzen. Eine Oxidation über diese Zeit hinaus vermindert die Dichtezunahme des Kohlenstoffpulvers beim Carbonisieren. Als Oxidationsmittel werden Luft oder andere oxidierende Gase, wie z. B. Sauerstoff,mit Sauerstoff oder Ozon angereicherte Luft oder Stickoxide bevorzugt.

Aus dem erfindungsgemäßen Kohlenstoffpulver können durch übliches Pressen, Carbonisieren und ggf. Graphitieren dichte Kohlenstoffkörper mit ausgezeichneten mechanischen Eigenschaften hergestellt werden. Bereits bei relativ niedrigen Preßdrücken lassen sich hohe Dichten und Festigkeiten beim carbonisierten Körper erreichen, wie sie mit bisher bekannten Kohlenstoffpulvern nicht möglich waren. Obwohl die Ursachen nicht völlig klar sind, wird vermutet, daß die positiven Eigenschaften, die ein Zeichen für die homogene Sinter- und Bindefähigkeit des Pulvers sind, auf die extrem hohe Plastizität des Materials zurückzuführen sind. Die Sinterung setzt bereits bei vergleichbar niedrigen Temperaturen ein.

Die Erfindung wird in den nachfolgenden Beispielen näher erläutert. Die Analysen der Materialien wurden nach den geltenden DIN-Vorschriften durchgeführt, wobei die Löslichkeit in Chinolin nicht bei 80 °C sondern in siedendem Chinolin bestimmt wurde. Dies führt insbesondere bei Materialien mit einem hohen chinolinunlöslichen Gehalt (QI) zu besser reproduzierbaren Werten. Der Fließpunkt wurde in einer Kapillare mit dem Gerät nach Dr. Tottoli bestimmt. Der Erweichungsbeginn wurde an 90 mg schweren Preßlingen mit einem Durchmesser von 6 mm, die unter einem Preßdruck von 100 MPa hergestellt wurden, mit einem Schubstangendilatometer bei einer Auflagekraft von 3 N unter Argon mit einer Aufheizgeschwindigkeit von 1 K/min ermittelt.

### Beispiel 1

Ein Steinkohlenteerpech mit einem Erweichungspunkt (Mettler) von 90 °C, einem Gehalt an Chinolinunlöslichem (QI) von 13,2 Gew.-% und einem Gehalt an Toluolunlöslichem (TI) vom 32,7 Gew.-% wird in einem Rührwerksverdampfer bei einem Druck von 1 mbar bis 460 °C destilliert. Der Destillationsrückstand hat einen Fließpunkt (Tottoli) von 350 °C und enthält 57,4 Gew.-% QI, 91,9 Gew.-% TI und 10,9 Gew.-% flüchtige Bestandteile. Er wird in einer Schwingmühle trocken bis auf eine mittlere Korngröße von 30 »m gemahlen. Das Pulver beginnt bei etwa 280 °C zu verbacken. Es wird eine Oxidationstemperatur von nur 180 °C gewählt, um ein Verbacken des Pulvers auch bei der zu erwartenden exothermen Reaktion mit Sicherheit auszuschließen.

Ein Teil des gemahlenen Rückstandes wird in Gegenwart von Luft bei 180 °C oxidiert und dabei im Abstand von einer Stunde jeweils eine Probe genommen. Die Proben werden mit 30 MPa zu Probekörpern gepreßt, die unter Inertgas in einem Kammerofen mit einem Temperaturgradienten von 1 K/min bis auf 1000 °C erhitzt werden.

Die Blähhöhe nimmt mit der Oxidationszeit ab. Nach einer Oxidationszeit von 10 Stunden tritt kein Blähen der Probe mehr auf. Die erforderliche Oxidationszeit beträgt daher 10 Stunden, um das Pulver bis in den Kern der einzelnen Partikel unschmelzbar zu machen. Der Rest des gemahlenen Rückstandes wird daher bei 180 °C 10 Stunden in Luft oxidiert. Das oxidierte Pulver hat einen Erweichungsbeginn von 250 °C, einen Sauerstoffgehalt von 2,9 Gew.-% und eine optische Anisotropie von 15 Vol.-%.

Es enthält 70,9 Gew.-% QI, 94,5 Gew.-% TI und 9,1 Gew.-% flüchtige Bestandteile. Es wird bei Raumtemperatur und einem Druck von 100 MPa zu einem zylinderischen Körper mit einem Durchmesser von 30 mm und einer Höhe von 10 mm gepreßt. Die Dichte dieses Körpers beträgt 1,25 g/cm³. Der Körper wird in Stickstoff bis 1 000 °C gebrannt. Seine Dichte erhöht sich dabei auf 1,72 g/cm³. Seine Biegebruchfestigkeit beträgt 135 MPa. In gleicher Weise wird ein zweiter Körper hergestellt, der aber bei einer Endtemperatur von 2 400 °C graphitiert wird. Er hat eine Dichte von 1,95 g/cm³ und eine Biegebruchfestigkeit von 125 MPa.

### Beispiel 2 (Vergleich)

Das gleiche Steinkohlenteerpech wie im Beispiel 1 wird unter den dort beschriebenen Bedingungen verarbeitet, ohne daß jedoch eine Oxidation durchgeführt wird. Die Analysenwerte stimmen mit denen des Destillationsrückstandes aus Beispiel 1 überein. Der auf eine mittlere Korngröße von 30 »m gemahlene Rückstand wird ohne Oxidation direkt wie in Beispiel 1 beschrieben zu einem Kohlenstoffkörper mit einer Dichte von 1,24 g/cm³ gepreßt. Beim Brennprozeß bläht er auf, so daß weitere Analysenwerte nicht mehr bestimmt werden können.

### Beispiel 3 (Vergleich)

Das gleiche Steinkohlenteerpech wie in Beispiel 1 wird in einem Rührwerksbehälter bei 460 °C unter Inertgas so lange thermisch behandelt, bis ein Mesophasenpech mit einer optischen Anisotropie von 70 Vol.-% erhalten wird. Das H/C-Verhältnis wird mit 0,48 ermittelt.

Das Mesophasenpech wird auf einen maximalen Partikeldurchmesser von 10 »m gemahlen und mit R = 0,24 oxidiert, wie in der EP-A-0 283 211 beschrieben. Das erhaltene Kohlenstoffpulver hat einen Erweichungsbeginn von 370 °C und enthält 93,2 Gew.-% QI, 96,1 Gew.-% TI, 10,2 Gew.-% flüchtige Bestandteile und 1,5 Gew.-% Sauerstoff. Daraus wird, wie im Beispiel 1 beschrieben, ein Kohlenstoffkörper gepreßt. Er hat eine Dichte von 1,21 g/cm³. Nach dem Brennen erhöht sich die Dichte auf 1,67 g/cm³, und seine Biegebruchfestigkeit beträgt 70 MPa. Nach dem Graphitieren erhöht sich die Dichte auf 1,92 g/cm³, aber die Biegebruchfestigkeit fällt auf 55 MPa. Trotz geringerer Partikelgröße und vergleichbarer Schrumpfung liegen die Festigkeitswerte erheblich niedriger als die im Beispiel 1 gefundenen.

### Beispiel 4 (Vergleich)

Das gleiche Steinkohlenteerpech wie im Beispiel 1 wird bei 15 mbar unter sonst gleichen Bedingungen wie im Beispiel 1 destilliert. Der Destillationsrückstand hat einen Fließpunkt von 330 °C und enthält 47,4 Gew.-% QI, 84,2 Gew.-% TI und 12,9 Gew.-% flüchtige Bestandteile. Er wird wie im Beispiel 1 auf eine mittlere Korngröße von 30 »m gemahlen und das Pulver 30 Stunden bei 180 °C oxidiert. Das Pulver hat einen Erweichungsbeginn von 310 °C und eine optische Anisotropie von 45 Vol.-%. Es enthält 62,5 Gew.-% QI, 96 Gew.-% TI, 10,6 Gew.-% flüchtige Bestandteile und 3,5 Gew.-% Sauerstoff. Wie im Beispiel 1 werden daraus Kohlenstoffkörper gepreßt, die eine Dichte von 1,23 g/cm³ haben. Nach dem Brennen beträgt die Dichte 1,62 g/cm³ und die Biegebruchfestigkeit 75 MPa.

Nach dem Graphitieren steigt die Dichte auf 1,83 g/cm³ und die Biegebruchfestigkeit fällt auf 65 MPa. Der höhere Druck bei der Destillation ergibt einen weicheren Rückstand mit höherem Flüchtigengehalt und niedrigerem QI und TI. Um den gemahlenen Rückstand bis in den Partikelkern unschmelzbar zu machen, sind längere Oxidationszeiten erforderlich.

Die damit verbundene Verschiebung des Erweichungsbeginns zu höheren Temperaturen zeigt bereits, daß eine Verschlechterung des Sinterverhaltens eingetreten ist. Das wird durch die geringere Dichteerhöhung beim Brennen und die niedrigen Festigkeitswerte bestätigt.

### Beispiel 5

Ein Steinkohlenteer wird wie im Beispiel 1 beschrieben destilliert. Der Destillationsrückstand hat einen Fließpunkt von 340 °C und enthält 57 Gew.-% QI, 93,6 Gew.-% TI und 11,3 Gew.-% flüchtige Bestandteile. Er wird auf eine mittlere Partikelgröße von 2 »m gemahlen. Das Pulver beginnt bei 290 °C zu verbacken. Der gemahlene Rückstand wird bei 200 °C in einem Luftstrom 24 Stunden oxidiert. Die Bestimmung der optimalen Oxidationszeit erfolgte in Anlehnung an die im Beispiel 1 beschriebene Methode. Das erhaltene Pulver hat einen Erweichungsbeginn von 260 °C, eine optische Anisotropie von 10 Vol.-% und einen Sauerstoffgehalt von 3 Gew.-%. Es enthält 71,2 Gew.-% QI, 97,3 Gew.-% TI und 10,9 Gew.-% flüchtige Bestandteile. Es wird wie im Beispiel 1 zu Kohlenstoffkörpern gepreßt, die gebrannt und graphitiert werden.

Die Dichte des ungebrannten Körpers beträgt 1,26 g/cm³. Nach dem Brennen steigt die Dichte auf 1,71 g/cm³ bei einer Biegebruchfestigkeit von 175 MPa. Der graphitierte Körper hat eine Dichte von 1,92 g/cm³ und eine Biegebruchfestigkeit von 155 MPa.

### Beispiel 6

Ein Steinkohlenteerpech mit einem Erweichungspunkt von 107 °C, 10,5 Gew.-% QI und 27,6 Gew.-% TI wird kontinuierlich bei einem Druck von 1 mbar und einer Temperatur des Rückstandes von 470 °C destilliert.

Der Rückstand hat einen Fließpunkt von 330 °C und enthält 53,2 Gew.-% QI, 90,6 Gew.-% TI und 11,7 Gew.-% flüchtige Bestandteile. Er wird in einer Gegenstrahlprallmühle mit integriertem Windsichter kontinuierlich gemahlen, wobei das Material mit einer Korngröße von bis zu 10 »m ausgeschleust wird. Das ausgeschleuste Pulver beginnt bei 290 °C zu verbacken. Es wird in Luft 4 Stunden bei 220 °C oxidiert. Die optimale Oxidationszeit wurde wie im Beispiel 1 ermittelt. Das oxidierte Kohlenstoffpulver hat einen Erweichungsbeginn von 250 °C und eine optische Anisotropie von 20 Vol.-%. Es enthält 66,8 Gew.-% QI, 98,6 Gew.-% TI, 9,4 Gew.-% flüchtige Bestandteile und 2,8 Gew.-% Sauerstoff.

Die daraus wie im Beispiel 1 hergestellten Kohlenstoffkörper haben nach dem Pressen eine Dichte von 1,27 g/cm³. Nach dem Brennen bis 1000 °C beträgt die Biegebruchfestigkeit 160 MPa bei einer Dichte von 1,77 g/cm³. Nach dem Graphitieren bei 2400 °C haben die Körper eine Biegebruchfestigkeit von 135 MPa bei einer Dichte von 1,96 g/cm³.

## Patentansprüche

1. Sinterfähiges Kohlenstoffpulver, **dadurch** **gekennzeichnet**, daß es 40 bis 75 Gew.-% chinolinunlösliche Bestandteile und mehr als 90 Gew.-% toluolunlösliche Bestandteile enthält, eine optische Anisotropie von weniger als 50 Vol.-% aufweist und einen Erweichungsbeginn zwischen 200 und 300 °C und einen Sauerstoffgehalt von mehr als 2 Gew.-% hat.

2. Verfahren zur Herstellung des Kohlenstoffpulvers nach Anspruch 1, **gekennzeichnet durch** die folgenden Verfahrensschritte:
a) Destillation eines bituminösen Produktes bei einem Druck von maximal 5 mbar und einer Endtemperatur von mindestens 400 °C,
b) Trockenmahlung des Destillationsrückstandes aus a auf eine mittlere Partikelgröße von vorzugsweise weniger als oder gleich 30 »m, und
c) Oxidation des gemahlenen Destillationsrückstandes aus b bei Temperaturen unterhalb der Temperatur beginnender Pulververbackung, bis auch der Kern der einzelnen Partikel nicht mehr schmilzt.

## Claims

1. Sinterable carbon powder, **characterized in that** it contains from 40 to 75% by weight of quinoline-insoluble constituents and more than 90% by weight of toluene-insoluble constituents, has an optical anisotropy of less than 50% by volume and has a beginning of softening at between 200 and 300°C and an oxygen content of more than 2% by weight.

2. A method of producing the carbon powder according to Claim 1, **characterizedby** the following method steps:
a) distillation of a bituminous product at a maximum pressure of 5 mbar and a final temperature of at least 400°C,
b) dry grinding of the distillation residue from a) to an average particle size of preferably less than or equal to 30 »m, and
c) oxidation of the ground distillation residue from b) at temperatures below the temperature at which baking of the powder begins, until even the core of the individual particles no longer melts.

## Revendications

1. Poudre de carbone frittable, caractérisée en ce qu'elle contient 40 à 75% en poids de composants insolubles dans la quinoléine et plus de 90% en poids de composants insolubles dans le toluène, qu'elle présente une anisotropie optique inférieure à 50% en volume et possède un début de ramollissement entre 200 et 300°C et une teneur en oxygène supérieure à 2% en poids.

2. Procédé pour la préparation de la poudre de carbone selon la revendication 1, caractérisé par les étapes opératoires suivantes :
a) distillation d'un produit bitumineux sous une pression maximale de 5 mbars et à une température finale d'au moins 400°C,
b) broyage à sec du résidu de distillation provenant de a) jusqu'à obtention d'une granulométrie moyenne, de préférence inférieure ou égale à 30 »m, et
c) oxydation du résidu de distillation broyé provenant de b) à des températures situées au-dessous de la température du début d'agglomération de la poudre jusqu'à ce que le noyau des différentes particules n'entre plus en fusion.
